Europäisches Patentamt

(19) European Patent Office

Office européen des brevets

(11) Publication number: **0 025 286**
B1

(12) # EUROPEAN PATENT SPECIFICATION

(45) Date of publication of patent specification: 18.01.84

(51) Int. Cl.³: **C 09 D 3/727** //(C09D3/727, 3/81)

(21) Application number: **80302836.4**

(22) Date of filing: **18.08.80**

(54) Alkali softenable coating compositions, process for preparing them and process for softening a coating made therefrom.

(30) Priority: 25.08.79 GB 7929691

(43) Date of publication of application:
18.03.81 Bulletin 81/11

(45) Publication of the grant of the patent:
18.01.84 Bulletin 84/3

(84) Designated Contracting States:
AT BE CH DE FR GB IT LI LU NL SE

(56) References cited:
DE - A - 2 035 919
DE - B - 1 277 480
GB - A - 1 110 055
US - A - 3 733 293

(73) Proprietor: Lingner and Fischer GmbH
Postfach 1440
D-7580 Buhl (Baden) (DE)

(72) Inventor: Hechenberger, Dieter A.
7 Franz-Lehar-Strasse
D-6920 Sinsheim 4/Esch (DE)
Inventor: Dirhold, Paul
Oberdorfstrasse 73
D-7591 Sasbach (DE)

(74) Representative: Russell, Brian John et al,
European Patent Attorney Beecham
Pharmaceuticals Great Burgh Yew Tree Bottom
Road
Epsom Surrey, KT18 5XQ (GB)

Courier Press, Leamington Spa, England.

# 0 025 286

Alkali softenable coating compositions, process for preparing them and process for softening a coating made therefrom

The present invention relates to dispersion-based surface-coating compositions, such as dispersion-based plasters and paints.

A useful class of known dispersion-based surface-coating compositions comprises those which dry after application to give a water-fast, washable surface. A concomitant disadvantage of such compositions however, is that, once applied to a surface and dried, they cannot conveniently be removed, for example by softening with an aqueous vehicle and stripping.

DE—A—2 035 919 describes a coating composition including polymers which are swellable in alkali and a polymer which is not swellable in alkali in the ratio 1:4 to 1:99.

It has now surprisingly been found that surface-coating compositions comprising a free-acid-group-containing polymer, a polymer not containing free acid groups, and a filler, may be softened, once dried, by the application of an alkaline aqueous solution. A further advantage of these compositions is that when softened they remain cohesive, allowing convenient removal, eg with a scraper.

Accordingly, the present invention provides a surface-coating composition comprising an aqueous dispersion of at least

(i) a free-acid-group-containing polymer,

(ii) a polymer not containing free acid groups, and

(iii) a filler compatible with the free-acid-group-containing polymer,

the free-acid-group-containing polymer and its proportion in the composition being such that when the composition is dried, the resultant dry coating is softenable by the application of aqueous alkali but not by the application of substantially neutral or acidic aqueous solution.

When used herein the term 'polymer' includes homo- co- and ter-polymers as well as polycondensates.

It will be clear from the foregoing that an essential feature of this invention is that the free-acid-group containing polymer, and its proportion in the composition, are chosen so that on drying the composition the resultant coat is alkali softenable. Hereinafter will be discussed suitable examples of polymers and proportions thereof to meet this requirement. However, it is pointed out that the identification of suitable polymers, and of suitable proportions thereof, is a simple matter of trial and error which could routinely be carried out by any skilled man.

Suitable free-acid-group containing polymers include polymers as defined above in which at least one of the monomer species has at least one free acid group.

The monomer containing the acid group or groups generally contains one such group. Preferred free acid groups are carboxyl groups.

Preferred polymers of this type include homo-, co- and ter-polymers of acrylic, methacrylic and crotonic acids. When the co- or ter-polymer contains a monomer or monomers not bearing any free acid group, suitable monomers of this type include vinyl acetate and acrylate and methacrylate esters.

Particularly preferred polymers of this type include vinyl acetate-crotonic acid copolymers and poly-acrylic acid.

Suitable polymers which do not contain free acid groups include homo-, co- and ter-polymers comprising at least one vinyl ester such as vinyl acetate or vinyl propionate. Suitable further monomers for the co- and ter-polymers include ethylene, maleic acid and versatic acid (a tert-$C_{9-11}$ alkyl-$\alpha$-carboxylic acid mixture supplied by Shell). Block co- and ter-polymers, for example those comprising polyvinylchloride, are also suitable.

Other suitable polymers include homo-, co- and ter-polymers comprising at least one acrylic or methacrylic ester. Suitable further monomers for the co- and ter-polymers include styrene.

Butadiene-styrene copolymers are also suitable.

Particularly preferred polymers of this type include styrene-acrylate copolymers.

Preferred compositions according to the present invention thus include compositions comprising, in aqueous dispersion, a vinyl acetate-crotonic acid copolymer or polyacrylic acid together with a styrene-acrylate copolymer.

Often the compositions according to the present invention will contain only two polymers, one of which contains free acid groups.

When the composition contains only two polymers, one of which contains free acid groups, the composition may be prepared from aqueous dispersions of the two polymers each having a solids content of 40 to 60% by weight.

It will be appreciated from the foregoing that for compositions having the desired softenable property the two polymers are more usually present in a 6:1 to 3:2 weight ratio of the free-acid-group containing polymer to the other polymer.

In a particular, preferred, aspect the present invention provides a composition as hereinbefore defined which further comprises

(iv) an optionally salified free-acid-group-containing polymer as colloidal solute.

Suitably the colloidal solute polymer is at least one of the aforementioned free-acid-group-containing polymers, or, if salified, is derived from at least one of these. Preferably the colloidal solute

2

polymer is, or is derived from, a single free-acid-group-containing polymer mentioned above.

Often the colloidal solute polymer will be the same as the free-acid-group-containing polymer in dispersion in the composition, or will be a salified derivative thereof.

Particularly preferred compositions according to the present invention thus include compositions comprising, in aqueous dispersion,

    (i) a vinyl acetate-crotonic acid copolymer or polyacrylic acid,

    (ii) a styrene-acrylate copolymer,

    (iii) a filler compatible with the vinyl acetate-crotonic acid copolymer or polyacrylic acid, and,     as colloidal solute,

    (iv) the same polymer as in (i) above, optionally salified.

Compositions of the above type may conveniently be prepared from a hydrosol of the optionally salified free-acid-group containing copolymer and aqueous dispersions of the remaining polymer components (generally as 40 to 60% by weight solids dispersions).

This hydrosol will generally have a colloidal solute solids content of 10 to 25% by weight. When the composition of this type is derived from the mixing of the hydrosol and aqueous dispersions of the two polymers as defined above, the hydrosol and free-acid-group containing polymer dispersion are usually present in a 20:80 to 80:20 weight ratio range.

It will be appreciated from the foregoing that the weight ratio of dispersed free-acid-group containing polymer to colloidal solute polymer or salt thereof in the preferred compositions lies in the range of 2:5 to 24:1.

It will thus be realised that the weight ratio of combined dispersed free-acid-group containing polymer and colloidal solute salified polymer to the other dispersed polymer in the preferred composition more usually lies in the range of 12:1 to 5:1.

The filler must be compatible with the free-acid-group containing polymer in such a way that the filler does not impair the water-softenable properties of the composition conferred by the free-acid-group containing polymer. It will be appreciated that suitable fillers may be readily ascertained.

Examples of fillers compatible with free-acid-group containing polymers used in the present invention include baryte powder (barium sulphate) and fillers based on siliceous material such as cristobalite powder, quartz sand and aluminosilicates, for example Plastorit* 0.5 (Naintsch) or a mixture thereof.

It will be appreciated that the surface-coating compositions of the present invention may also contain conventional additives such as plasticisers, film forming auxiliaries, preservatives, defoamers, pigments, and thickening pastes for example aqueous dispersion of modified clays such as Bentones* (modified montmorillonites) and Attagels* (Modified attapulgites). The conventional additives when present should all be compatible with the free-acid-group containing polymer(s). Additives which are compatible may be readily ascertained.

The surface coating compositions according to the present invention include paints and plasters. Both paints and plasters according to the present invention contain the same polymers, but as is conventional the paints will differ from the plasters in being adjusted to have a lower viscosity and in containing a greater proportion of pigments, and a lower proportion of fillers as finer particles.

The invention provides paints and plasters which are especially suitable for application by roller. Plasters suitable for roller application contain a far greater percentage of polymer dispersion and optional polymer hydrosol than those applied for example by trowelling.

According to a further aspect of the invention there is provided a process for the preparation of a surface-coating composition which comprises

i) optionally forming a hydrosol which comprises an optionally salified free-acid-group containing polymer as colloidal solute, and

ii) bringing into association in aqueous dispersion two polymers one of which contains free acid groups and a filler compatible with the free-acid-group containing polymer, optionally together with the hydrosol.

The aqueous polymer dispersion are often commercially available aqueous polymer dispersions.

Typical methods of bringing the composition components into association include stirring them together.

The hydrosol in the preferred compositions is conveniently prepared from an aqueous dispersion of the free-acid-group containing polymer by

a) the addition of one or more suitable water-miscible solvents, and/or

b) salification of the polymer.

The skilled man will appreciate that, when the hydrosol is formed by the addition of solvent(s), the solvent or solvents and the weight ratio thereof to the water present in the total composition will be chosen for adequate water miscibility and to retain the polymer in colloidal solution. Suitable solvents include monohydric alcohols, more suitably a lower alkanol such as ethanol, and polyhydric alcohols, such as ethylene and propylene glycol and members of the glyme series.

---

* Registered Trade Mark

When the hydrosol is formed by the salification of the polymer, this is conveniently carried out by the addition of an alkali, optionally in aqueous solution. Suitable examples of such alkalis include ammonia, amines or water-soluble inorganic alkalis such as alkali metal hydroxides or alkaline alkali metal salts.

The present invention also provides a process for softening the surface-coating compositions of the present invention in their dried state, which process comprises applying an alkaline aqueous solution to the dried composition.

In general any water-soluble alkaline material will be suitable for these solutions. Water-soluble silicates are especially suitable, preferably metasilicates, in particular alkali metal metasilicates, especially sodium metasilicate. These solutions may also contain soluble bases, such as alkali metal hydroxides, preferably sodium hydroxide.

The solutions suitably contain 0.1 to 5.0% by weight of alkaline material, preferably 1.0—2.0% by weight.

The solutions may also contain solubilising agents and surfactants.

The following Examples illustrate the invention:

'Parts' therein means 'parts by weight', and '%' by weight.

### Example 1 — Coarse Plaster

A plaster of the following composition was prepared by the method set out below:

| | Parts |
|---|---|
| 20% solids polyacrylic acid hydrosol, based on Neo-Cryl* BT8 | 12.0 |
| 40% polyacrylic acid aqueous polymer dispersion Neo-Cryl* BT8 | 10.0 |
| 50% styren-acrylate based aqueous polymer dispersion, Vinnapas* SAF520 (Wacker) | 2.0 |
| Plasticiser | 2.5 |
| *Fillers I* | |
| Baryte powder, Barytmehl (Sachtleben) | 4.0 |
| Modified crystobalite, Crystobalite W006 (Quarzwerke Frechen) | 10.7 |
| Plastorit 0.5 (Naintsch) | 4.0 |
| *Fillers II* | |
| Quartz sand, Quarzsand F36 (Quarzwerke Frechen) | 10.0 |
| Quartz sand, 0.4—1.2 mm particles | 13.5 |
| 1.0—2.2 mm particles | 17.0 |
| *Thickener* | |
| 9.7% Bentone* WE aqueous paste containing 0.3% preservative | 3.5 |
| *Other ingredients* | |
| Pigment, titanium dioxide | 10.0 |
| Preservative | 0.3 |
| Defoamer | 0.5 |

* Registered Trade Mark

Neo-Cryl° BT8 (50 parts) was stirred into a mixture of propan-2-ol (11.1 parts) and water (35.9 parts), and 25% ammonia (3 parts) was added with fast stirring to give a clear hydrosol of pH 7.5 to 8. The aqueous polymer dispersion was added and the plasticiser preservative and defoamer were added under slow stirring. The pigment and baryte filler I were then added with fast stirring under high-shear conditions with a tooth-crown stirrer on a Pendraulik Technikum Dissolver Type TD to give a good dispersion and pigment and filler particle sizes below 40 $\mu$m.

A part of the Neo-Cryl° BT8 was added under slow stirring followed by the crystobalite filler I and Plastorit 0.5 under fairly fast stirring without high shear. The rest of the Neo-Cryl° BT8 and the fillers II were added under slow stirring followed by the thickener under slow stirring followed by the thickener under fairly fast stirring.

Example 2 — Fine plaster

A plaster, differing from that of Example 1 in that the following Fillers II were used in place of the Fillers II in the plaster of Example 1, was prepared by the methods of Example 1.

| Fillers II | Part |
| --- | --- |
| Quartz sand F 36 (Quarzwerke, Frechen) | 18.0 |
| Quartz sand, 0.7 to 1.2 mm particles | 22.5 |

## Claims

1. A surface-coating composition characterised in that it comprises an aqueous dispersion of at least
 (i) a free-acid-group containing polymer,
 (ii) a polymer not containing free acid groups, and
 (iii) a filler compatible with the free-acid-group containing polymer,
the free-acid-group containing polymer and its proportion in the composition being such that when the composition is dried, the resultant dry coating is softenable by the application of aqueous alkali but not by the application of substantially neutral or acidic aqueous solutions, the weight ratio of free-acid-group containing polymer to polymer not containing free acid groups is in the range of 6:1 to 3:2.

2. A composition as claimed in Claim 1 which further comprises
 (iv) an optionally salified, free-acid-group containing polymer,
as a colloidal solute.

3. A composition as claimed in Claim 2, wherein the weight ratio of dispersed free-acid-group containing polymer to optionally salified free-acid-group containing colloidal solute polymer is in the range of 2:5 to 24:1.

4. A composition as claimed in Claim 2 or Claim 3 wherein the weight ratio of combined dispersed free-acid-group containing polymer and optionally salified free-acid-group containing colloidal solute polymer to polymer not containing free acid groups is in the range of 12:1 to 5:1.

5. A composition as claimed in any one of Claims 1 to 4 comprising in aqueous dispersion
 (i) a vinyl acetate-crotonic acid copolymer or polyacrylic acid,
 (ii) a styrene-acrylate copolymer,
 (iii) a filler compatible with the vinyl acetate-crotonic acid copolymer or polyacrylic acid,
and optionally, as colloidal solute,
 (iv) the same polymer as in (i) above, optionally salified.

6. A composition as claimed in any one of Claims 1 to 5 wherein the filler is baryte powder, cristobalite powder, quartz sand or an aluminosilicate or a mixture thereof.

7. A composition as claimed in any one of Claims 1 to 6 which is a paint or plaster.

8. A process for the preparation of a surface-coating composition which process is characterised by
 (i) optionally forming a hydrosol which comprises an optionally salified free-acid-group containing polymer as colloidal solute, and
 (ii) bringing into association in aqueous dispersion a free-acid-group containing polymer, a polymer not containing free acid groups and a filler compatible with the free-acid-group containing polymer, optionally together with the hydrosol.

9. A process for softening the surface-coating compositions as claimed in any one of Claims 1 to 7 which process is characterised by applying an alkaline aqueous solution to the dried composition.

* Registered Trade Mark

**Revendications**

1. Composition pour le revêtement de surfaces, caractérisée en ce qu'elle est constituée par une dispersion aqueuse renfermant au moins:
(i) un polymère contenant des groupes acides libres,
(ii) un polymère ne contenant pas de groupes acides libres, et
(iii) une charge compatible avec le polymère contenant des groupes acides libres,
le polymère contenant des groupes acides libres et sa proportion dans la composition étant tels que, lorsque la composition est séchée, le revêtement sec résultant puisse être ramolli par l'application d'un produit alcalin aqueux, mais non pas par l'application de solutions aqueuses sensiblement neutres ou acides, et le rapport en poids entre le polymère contenant des groupes acides libres et le polymère ne contenant pas de groupes acides libres est compris dans une gamme allant de 6:1 à 3:2.

2. Composition suivant la revendication 1, caractérisée en ce qu'elle renferme en outre:
(iv) un polymère contenant des groupes acides libres facultativement salifié
à titre de substance en solution colloïdale.

3. Composition suivant la revendication 2, caractérisée en ce que le rapport en poids entre le polymère contenant des groupes acides libres dispersé et le polymère formant substance en solution colloïdale contenant des groupes acides libres facultativement salifié est compris dans une gamme allant de 2:5 à 24:1.

4. Composition suivant la revendication 2 ou 3, caractérisée en ce que le rapport en poids entre le polymère contenant des groupes acides libres dispersé et le polymère formant substance en solution colloïdale contenant des groupes acides libres facultativement salifié combinés, d'une part, et le polymère ne contenant pas de groupes acides libres, d'autre part, est compris dans une gamme allant de 12:1 à 5:1.

5. Composition suivant l'une quelconque des revendications 1 à 4, caractérisée en ce qu'elle est constituée par une dispersion aqueuse de:
(i) un copolymère acétate de vinyle-acide crotonique ou de l'acide polyacrylique,
(ii) un copolymère styrène-acrylate,
(iii) une charge compatible avec le copolymère acétate de vinyle-acide crotonique ou l'acide polyacrylique,
et facultativement, à titre de substance en solution colloïdale,
(iv) le même polymère que sous (i) ci-dessus, facultativement salifié.

6. Composition suivant l'une quelconque des revendications 1 à 5, caractérisée en ce que la charge est de la poudre de baryte, de la poudre de cristobalite, du sable de quartz ou bien un aminosilicate ou un mélange de ceux-ci.

7. Composition suivant l'une quelconque des revendications 1 à 6, constituée par une peinture ou un enduit.

8. Procédé pour la préparation d'une composition pour le revêtement de surfaces, ce procédé étant caractérisé en ce que:-
(i) on forme facultativement un hydrosol qui est constitué par un polymère contenant des groupes acides libres facultativement salifié à titre de substance en solution colloïdale, et
(ii) on associe en dispersion aqueuse un polymère contenant des groupes acides libres, un polymère ne contenant pas de groupes acides libres et une charge compatible avec le polymère contenant des groupes acides libres, facultativement conjointement à l'hydrosol.

9. Procédé pour le ramollissement de compositions pour le revêtement de surfaces suivant l'une quelconque des revendication 1 à 7, ce procédé étant caractérisé en ce qu'on applique une solution alcaline aqueuse à la composition séchée.

**Patentansprüche**

1. Eine Zusammensetzung zum Überziehen von Oberflächen, dadurch gekennzeichnet, daß sie eine wäßrige Dispersion von mindestens
(i) einem mindestens eine freie Säuregruppe enthaltenden Polymer,
(ii) einem keine freie Säuregruppe enthaltenden Polymer
(iii) einem Füllstoff, welcher mit dem freie Säuregruppe(n) enthaltenden Polymer verträglich ist, umfaßt, wobei das freie Säuregruppe(n) enthaltende Polymer und seine Anteilsmenge in der Zusammensetzung derart gewählt ist, daß, wenn die Zusammensetzung getrocknet ist, der gebildete trockene Überzug durch das Auftragen von wäßrigem Alkali erweicht, aber nicht durch das Auftragen von praktisch neutralen oder sauren wäßrigen Lösungen, und das Gewichtsverhältnis von freie Säuregruppe(n) enthaltendem Polymer zu dem keine freien Säuregruppen enthaltenden Polymer im Bereich von 6:1 bis 3:2 liegt.

2. Eine Zusammensetzung wie in Anspruch 1 beansprucht, welche außerdem
(iv) ein gegebenenfalls in die Salzform überführtes freie Säuregruppe(n) enthaltendes Polymer als kolloidal gelösten Stoff enthält.

3. Eine Zusammensetzung wie in Anspruch 2 beansprucht, in welcher das Gewichtsverhältnis von dispergiertem, freie Säuregruppe(n) enthaltendem Polymer zu gegebenenfalls in die Salzform überführtem, freie Säuregruppe(n) enthaltendem kolloidal gelöstem Polymer im Bereich von 2:5 bis 24:1 liegt.

4. Eine Zusammensetzung wie in Anspruch 2 oder Anspruch 3 beansprucht, in welcher das Gewichtsverhältnis von kombiniert dispergiertem, freie Säuregruppe(n) enthaltendem Polymer und gegebenenfalls in die Salzform überführtem, freie Säuregruppe(n) enthaltendem kolloidal gelöstem Polymer zu dem keine freien Säuregruppen enthaltendem Polymer im Bereich von 12:1 zu 5:1 liegt.

5. Eine Zusammensetzung wie in irgendeinem der Ansprüche 1 bis 4 beansprucht, enthaltend in wäßriger Dispersion

(i) ein Vinylacetat-Crotonsäurecopolymer oder Polyacrylsäure,
(ii) ein Styrol-Acrylatcopolymer,
(iii) einen Füllstoff, welcher mit dem Vinylacetat-Crotonsäurecopolymer oder Polyacrylsäure verträglich ist,
und gegebenenfalls als kolloidal gelösten Stoff
(iv) das gleiche Polymer wie oben in (i) angegeben, gegebenenfalls in Salzform überführt.

6. Eine Zusammensetzung wie in irgendeinem der Ansprüche 1 bis 5 beansprucht, in welcher der Füllstoff Barytpulver, Cristobalitpulver, Quarzsand oder ein Alumosilikat oder eine Mischung dieser Füllstoffe ist.

7. Eine Zusammensetzung wie in irgendeinem der Ansprüche 1 bis 6 beansprucht, welche ein Anstrichmittel oder eine Verputzmasse ist.

8. Ein Verfahren zur Herstellung einer Zusammensetzung zum Überziehen von Oberflächen, welches Verfahren gekennzeichnet ist durch
(i) gegebenenfalls das Herstellen eines Hydrosols, welches ein gegebenenfalls in die Salzform überführtes freie Säuregruppe(n) enthaltendes Polymer als kolloidal gelösten Stoff enthält, und
(ii) das in wäßriger Dispersion miteinander Zusammenbringen eines freie Säuregruppe(n) enthaltenden Polymers, eines keine freien Säuregruppen enthaltenden Polymers und eines mit dem freie Säuregruppe(n) enthaltenden Polymer verträglichen Füllstoffs, gegebenenfalls zusammen mit dem Hydrosol.

9. Ein Verfahren zum Erweichen der Zusammensetzungen zum Überziehen von Oberflächen, wie in irgendeinem der Ansprüche 1 bis 7 beansprucht, welches Verfahren gekennzeichnet ist durch das Auftragen einer alkalischen wäßrigen Lösung auf die getrocknete Zusammensetzung.